# EUROPÄISCHE PATENTANMELDUNG

(11) **EP 2 386 200 A1**
(43) Veröffentlichungstag der Anmeldung: **16.11.2011**
(21) Anmeldenummer: 11003675.3
(22) Anmeldetag: 05.05.2011
(51) Int. Cl.: A01F 29/09

(54) **Selbstfahrender Feldhäcksler**

(30) Priorität: 12.05.2010 DE 202010006714 U
(71) Anmelder: Maschinenfabrik Bernard Krone GmbH, 48480 Spelle (DE)
(72) Erfinder: Hülsmann, Michael, 49599 Voltlage/Weese (DE)

(57) **Zusammenfassung**

Selbstfahrender Feldhäcksler (1) zum Aufnehmen und Häckseln von Mais, Anwelkgras, Grünfutter und dergleichen Erntegut mit Aufnahme- und Einzugsorganen und einer nachgeordneten Häckseltrommel (8) mit in Umfangsrichtung der Häckseltrommel (8) mit Abstand zueinander angeordneten an Haltern (17) durch Befestigungsmittel (16) fixierte Schneidmesser (15), welche in ihrem Abstand zu einer der Häckseltrommel (8) zugeordneten Gegenschneide (9) nachstellbar sind, wobei die Schneidmesser (15) jeweils zumindest eine Aussparung (26) aufweisen, welche durch eine Öffnung (25) im Halter (17) des Schneidmessers (15) zumindest teilweise sichtbar ist, wobei die Öffnung (25) im Halter (17) des Schneidmessers (15) zur Unterstützung der Schneidmessereinstellung mit einem Hilfswerkzeug (27) dient.

## Beschreibung

Die Erfindung betrifft einen selbstfahrenden Feldhäcksler nach dem Oberbegriff des Anspruchs 1. Derartige Feldhäcksler werden vielfach zum Ernten und Zerkleinern von verschiedenartigem Erntegut verwendet. Es ist möglich, verschiedene Erntevorsätze, wie z.B. eine Pickup oder ein reihenunabhängiges Maisschneidwerk an den Feldhäcksler anzukuppeln. Je nach Einsatzbedingungen kommen unterschiedliche Vorsatzbreiten zum Einsatz. Ein Einzugsaggregat übernimmt den Transport des Erntegutes von dem Erntevorsatz zu der Häckseltrommel. Der Häckseltrommel ist ggf. eine Konditioniereinrichtung, welche nur im Maiseinsatz Verwendung findet, und ein Wurfbeschleuniger nachgeordnet, welcher das Erntegut beschleunigt, damit das Erntegut in einen Auswurfbogen gelangen kann, wodurch der Erntegutstrahl auf einen neben dem Feldhäcksler fahrenden Transportwagen übergeben wird.

Die Häckseltrommel ist auf ihrer Mantelfläche mit Messerhaltern bestückt, welche vorwiegend einen ebenen Befestigungsbereich zur Aufnahme der Schneidmesser aufweisen, deren Schneidenbereich radial nach außen über die Halter hinausragen. Die Befestigung der Häckselmesser erfolgt in der Regel durch eine Vielzahl von Befestigungsschrauben. Aufgrund der Arbeitsweise von Feldhäckslern unterliegen die Schneidkanten der Häckselmesser einem starken Verschleiß, was zu einem starken Anstieg des Antriebsenergiebedarfs für das Schneiden des Ernteguts führt. Darüber hinaus können Verunreinigungen, wie z.B. Steine als Fremdkörper zu einer Beschädigung der Schneidkante beitragen. Üblicherweise sind Feldhäcksler mit einer Schleifvorrichtung für die Häckselmesser ausgerüstet, um möglichst gleichbleibende Schnittverhältnisse zu erreichen. Je nach Einsatzbedingungen kann ein Schärfen der Häckselmesser mehrmals täglich erforderlich sein. Dieses ständige Scharfschleifen führt zwangsläufig zu einer stetigen Verringerung der Schneidkante und damit des Überstandes der Messerschneidkanten über die Messerträger, so dass die Häckseltrommel in ihrem Außendurchmesser kleiner wird. Dies bedingt eine Vergrößerung des Schneidspaltes mit einem daraus resultierenden erhöhten Schnittenergiebedarf. Daher ist die Gegenschneide nach jedem Schleifvorgang wieder an die abgeschliffenen Häckselmesser anzustellen. Dieser Vorgang ist aber nur in einem begrenzten Bereich möglich. Um die Häckselmesser nicht nach Ausschöpfen der Anstellmöglichkeiten der Gegenschneide durch neue ersetzen zu müssen, ist es bekannt, die Häckselmesser nach dem Lockern der Befestigungsschrauben in Richtung der Gegenschneide zu verschieben.

Derartiges Vorgehen zur Messereinstellung ist in diversen Ausführungsformen bekannt. Die Messerverstellung wird jedoch überwiegend mit einem Justierhebel und einem Schlagwerkzeug, welches das Messer bei gelockerten Befestigungsschrauben in kleinen Schlägen in Richtung Gegenschneide drückt, vollzogen. Aufgrund der Vielzahl der erforderlichen Schrauben für die Befestigung der Häckselmesser ist dieser Vorgang jedoch sehr zeitaufwendig und es werden zu viele verschiedene Werkzeuge, welche im ständigen Wechsel verwendet werden, benötigt.

Ebenso lassen sich die Messer in dieser Art und Weise nur sehr grob und ungenau einstellen, da oft kein Gefühl für den Anlagedruck an den Messerhaltern vorhanden ist. Dadurch kann es im Extremfall zu einer Kollision der Messer mit der Gegenschneide kommen, so dass es einer zeitintensiven Neueinstellung der Messer bedarf.

Darüber hinaus ist das Messersetzverhalten beim Anziehen der Befestigungsschrauben zu hoch, da das Messer nur mit geringer Vorspannung nachgestellt werden kann.

Da es aufgrund der Laufruhe und der höheren Verschleißfestigkeit ebenso Ausführungsformen der Häckseltrommel gibt, bei denen die Schneidmesser unterhalb der

Messerhalter angebracht sind und somit durch diese verdeckt sind und keine Ansetzpunkte für ein Schlagwerkzeug bieten, ist bei derartigen, ansonsten vorteilhaften Häckseltrommeln, die Messereinstellung noch schwieriger und zeitaufwendiger.

Der Erfindung liegt daher die Aufgabe zu Grunde, einen selbstfahrenden Feldhäcksler der eingangs genannten Art zu schaffen, an dem die zuvor genannten Nachteile vermieden werden und eine zeitsparende, feinfühligere Einstellung der Schneidmesser an die Gegenschneide erreicht wird.

Erfindungsgemäß wird diese Aufgabe durch die kennzeichnenden Merkmale des Anspruchs 1 gelöst. Vorteilhafte Ausgestaltungen sind Gegenstand der weiteren Ansprüche.

Gemäß der Erfindung ist es bei einem selbstfahrenden Feldhäcksler mit einer an ihrem Umfang mit Schneidmessern besetzten Häckseltrommel zum Häckseln von Mais, Gras und dergleichen Erntegut vorgesehen, jedes Messer vorzugsweise unterhalb des Messerhalters mit Schrauben zu befestigen. Die Schrauben können in eingearbeitete Gewindebohrungen von unten oder als eine bevorzugte Ausführungsform von oben in ein Anschraubformteil, welches gleichzeitig als Gutleitelement und als Klemmbalken für die Schneidmesser dient, verschraubt werden, wobei die Schrauben vorteilhaft durch Senkbohrungen tiefer gesetzt sind, da die Schraubenköpfe sonst den Gutstrom behindern. Die Messer der Häckseltrommel sind vorzugsweise so zu gestalten, dass sie zwei Aussparungen aufweisen, welche in ihrer Längserstreckung quer zu der Verschieberichtung des Messers angeordnet sind und durch eine Öffnung im Schneidmesserhalter zumindest teilweise sichtbar ist, wobei die Öffnung im Halter des Schneidmessers zur Unterstützung der Schneidmessereinstellung mit einem Hilfswerkzeug dient. Unter dem Begriff Aussparung werden in diesem Zusammenhang längliche Durchbrüche, Langlöcher oder längliche Vertiefungen in den Messern, welche in der Größe dem Hilfswerkzeug angepasst sind, verstanden. Das Verfahren zur Herstellung der Aussparungen ist dabei unerheblich. Ebenso können die Aussparungen sowohl runde als auch eckige Konturen aufweisen. Die Öffnungen in den Schneidmesserhaltern sind vorzugsweise als Rund- oder Vierkantlöcher ausgestaltet. Das Hilfswerkzeug ist vorteilhafterweise als ein Exzenter ausgebildet. In einer bevorzugten Ausführungsform besteht das Werkzeug aus einem Hebel und einem runden Exzenterstück, wobei das Exzenterstück an einer Stirnseite einen Ansatz zur formschlüssigen und somit verdrehsicheren Verbindung mit dem Hebel aufweist. Dadurch kann der Hebel jeweils in der optimalen Bedienposition zum Exzenterstück positioniert werden. An der gegenüberliegenden Stirnseite ist das Exzenterstück mit einem exzentrischen Zapfen versehen. Dieser kann in verschiedenen Ausführungsformen, beispielsweise durch Zerspanung aus dem Vollen hergestellt oder als eingesetzter Stift ausgeführt sein. Dadurch, dass die Aussparungen in den Messern und die Öffnungen in den Messerhaltern übereinanderliegen, wird in vorteilhafter Weise ermöglicht, dass das Hilfswerkzeug nacheinander in die Bohrungen des Messerhalters gesteckt werden kann, so dass der Exzenterzapfen des Hilfswerkzeuges in die jeweilige Aussparung des Messers greift. Das in der Öffnung des Messerhalters geführte Hilfswerkzeug wandelt durch gleichzeitigen Eingriff des Exzenterzapfens in die darunter liegende Aussparung des Schneidmessers die rotatorische Bewegung, die der Anwender auf den Hebel ausübt, in eine translatorische Bewegung des Schneidmessers um. Dadurch kann das Messer mit nur einem Werkzeug in und entgegen der Richtung der Gegenschneide feinfühlig justiert werden. Sind die Messer passend zu der Gegenschneide eingestellt, werden die Befestigungsschrauben angezogen. Vorteilhafterweise können die Befestigungsschrauben der Messerhalter durch die große Hebelübersetzung des Einstellwerkzeugs stärker vorgespannt bleiben, so dass sich das an die Gegenschneide angestellte Messer beim Festziehen nicht mehr versetzt.

Weitere Vorteile und Einzelheiten der Erfindung ergeben sich aus den Unteransprüchen und einem in den Zeichnungen dargestellten Ausführungsbeispiel, das im Folgenden beschrieben wird.

In der Zeichnung zeigt:
- **Fig. 1:**: einen gattungsgemäßen Feldhäcksler in Seitenansicht, wobei zur besseren Erkennbarkeit der Bauteile die Maschinenverkleidungen entfernt sind;
- **Fig. 2:**: eine perspektivische Ansicht der Häckseleinrichtung des erfindungsgemäßen Feldhäckslers nach Fig. 1;
- **Fig. 3:**: eine perspektivische Explosionsdarstellung einer Messerhalterbaugruppe der Häckseleinrichtung nach Fig. 2

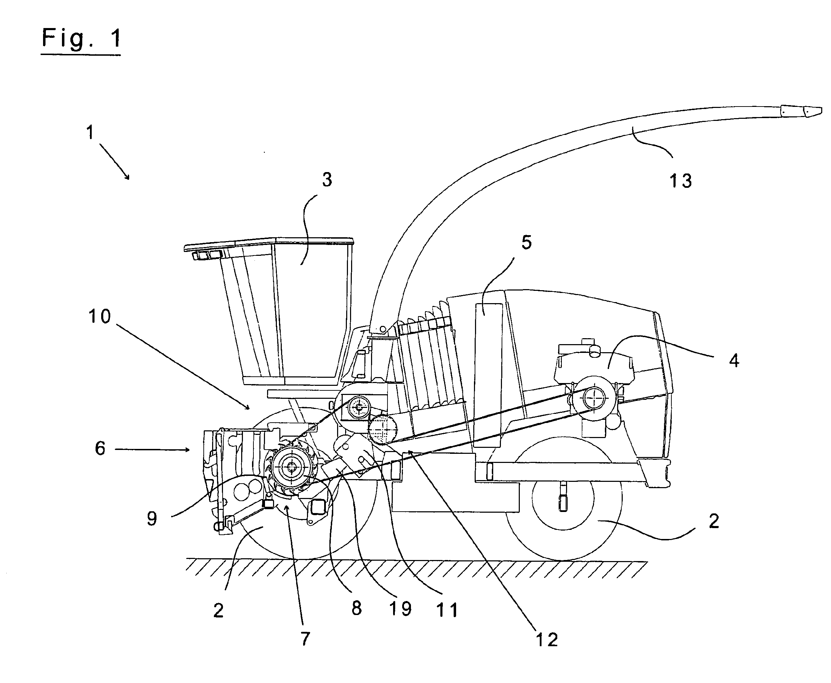

Fig. 1 zeigt einen teils schematisch veranschaulichten selbstfahrenden Feldhäcksler 1, wobei zur besseren Erkennbarkeit der Bauteile die Maschinenverkleidungen teilweise entfernt sind. Der Feldhäcksler 1 ist eine Erntemaschine zum Ernten und Zerkleinern von Erntegut wie Gras, Mais oder dergleichen, welche sich auf Rädern 2 zum Erdboden hin abstützt und eine Fahrerkabine 3, einen Antriebsmotor 4 und eine zentrale Kühleinheit 5 umfasst. Für den jeweiligen Erntevorgang trägt der Feldhäcksler 1 frontseitig ein nicht dargestelltes Emtevorsatzgerät, beispielsweise ein Maisgebiss, an dem sich eine Einzugseinrichtung 6 mit Einzugs- und Vorpresswalzen und eine Häckseleinrichtung 7 anschließen. Die Häckseleinrichtung 7 besteht im Wesentlichen aus der Häckseltrommel 8 und der Gegenschneide 9. Ferner ist die Häckseleinrichtung 7 mit einer Schleifvorrichtung 10 für das Nachschleifen der Häckseltrommel 8 ausgerüstet. Je nach Einsatzbedingungen ist der Häckseleinrichtung 7 eine Konditioniereinrichtung 11 nachgeordnet, von der das geschnittene Erntegut mittels eines Auswurfbeschleunigers 12 durch den Auswurfkrümmer 13 auf ein dem Abtransport dienendes Sammelfahrzeug überladen wird.

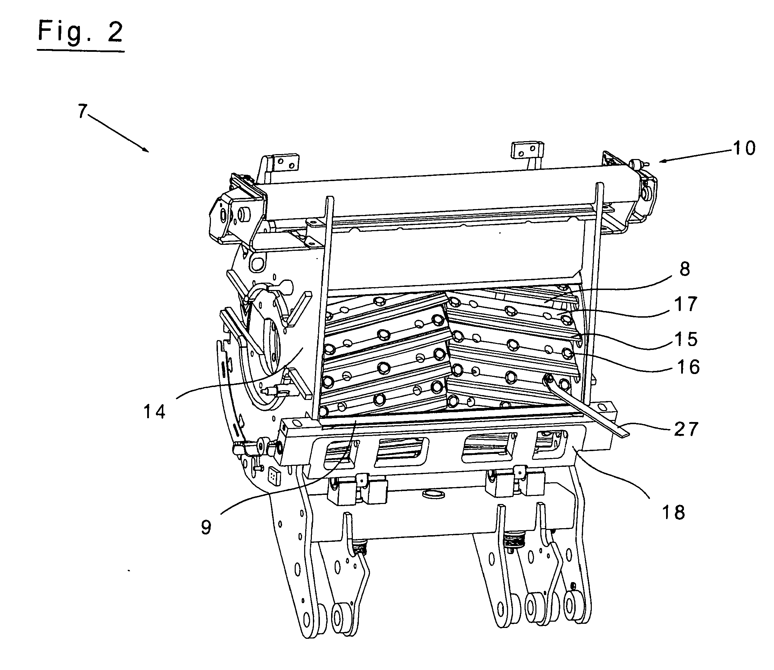

Die schematische Perspektivansicht der Häckseleinrichtung 7 des erfindungsgemäßen Feldhäckslers 1 nach Fig. 1 in einer möglichen Ausführung ist in Fig. 2 dargestellt. Die Häckseleinrichtung 7 ist im Wesentlichen aus einer Häckseltrommel 8, welche in einem Trommelgehäuse 14 untergebracht ist und einer Gegenschneide 9 gebildet.

Zum Zerkleinern des Erntegutes hat die Häckseltrommel 8 auf ihrer Mantelfläche zwei nebeneinander, versetzt zueinander angeordnete Reihen von Schneidmessern 15, welche jeweils mit drei Befestigungsschrauben 16 an einem an der Häckseltrommel 8 angeschweißten, bearbeiteten Messerhalter 17 befestigt sind. Wie näher aus Fig. 2 hervorgeht, ist jedes Schneidmesser 15 unterhalb des Messerhalters 17 angebracht. Die Messerhalter 17 mit den Schneidmessern 15 haben darüber hinaus eine Schrägausrichtung zu der Mitte der Häckseltrommel 8 hin. Aufgrund dieser v-förmigen Anordnung der Schneidmesser 15 ist bei vollem Messerbesatz stets ein Schneidmesser 15 im Eingriff der Gegenschneide 9, was vorteilhaft zu einem gleichmäßigen Schneidverhalten und einem ruhigen Lauf der Maschine führt. Die Häckseltrommel 8 ist um eine quer zur Fahrtrichtung des Feldhäckslers 1 ausgerichtete Rotationsachse drehbar im Trommelgehäuse 14 gelagert. Beim Häckselvorgang wirken die Schneidmesser 15 mit der Gegenschneide 9 zusammen, welche auf einer schwenkbar am Trommelgehäuse 14 gehalterten Gegenschneidenauflage 18 angeordnet ist. Zur Zuführung des Erntegutes weist die Häckseleinrichtung 7 in ihrem vorderen Bereich eine Öffnung auf, durch die von der Einzugseinrichtung 6 der Häckseleinrichtung 7 das Erntegut zum Häckseln aufgegeben wird. Im hinteren Bereich schließt sich an das Trommelgehäuse 14 der Häckseleinrichtung 7 ein Auswurfkanal 19 an, zu dem das an der Gegenschneide 9 von den Schneidmessern 15 geschnittene Erntegut im unteren Bereich des Trommelgehäuses 14 geführt wird.

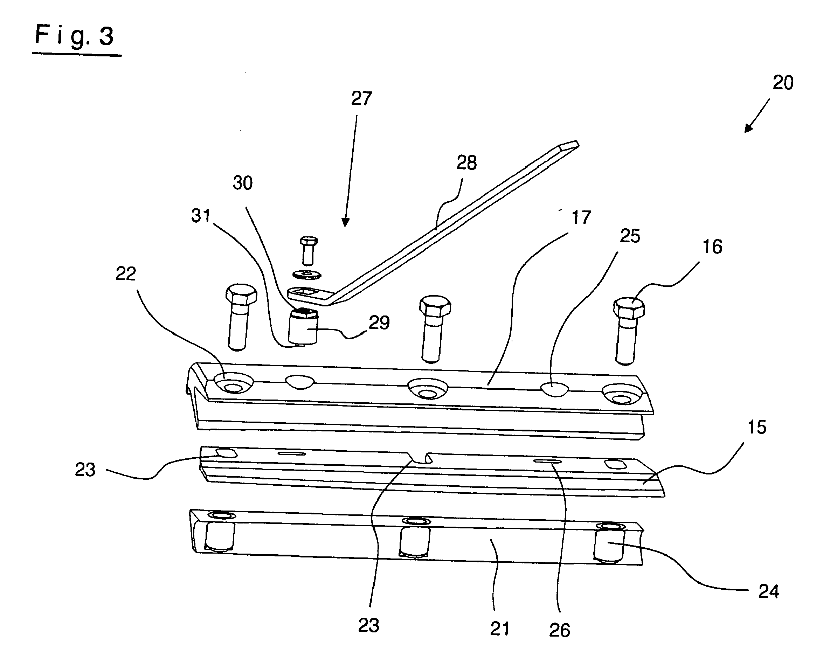

**Fig. 3** zeigt eine perspektivische Explosionsdarstellung einer Messerhalterbaugruppe 20 der Häckseleinrichtung 7 nach Fig. 2. Die Messerhalterbaugruppe 20 besteht aus einem Messerhalter 17, einem Schneidmesser 15, einem Anschraubformteil 21 und Befestigungsschrauben 16. Das ebene Schneidmesser 15 ist unterhalb des Messerhalters 17 fixiert, wobei die Befestigungsschrauben 16 durch drei Durchgangsbohrungen 22 in dem Messerhalter 17 und Langlöcher 23 in dem Schneidmesser 15 in eingeschweißte Gewindehülsen 24 des Anschraubformteils 21 geschraubt werden. Das Anschraubformteil 21 dient sowohl als Klemmbalken als auch aufgrund der bogenförmigen Geometrie als Leitelement für das Erntegut. Damit die Befestigungsschrauben 16 den Erntegutfluss nicht behindern, sind die Durchgangsbohrungen 22 in dem Messerhalter 17 versenkt. Das mittig liegende Langloch 23 in den Schneidmessern 15 für die Befestigungsschrauben 16 ist nach hinten hin offen, so dass für den Austausch der Schneidmesser 15 die mittlere Befestigungsschraube 16 nicht demontiert werden muss und auf diese Weise das Anschraubformteil 21 gehalten wird.

Der Messerhalter 17 umfasst zwei zusätzliche Führungsöffnungen 25, welche in diesem Ausführungsbeispiel als Bohrung ausgebildet sind. Des Weiteren weist das Schneidmesser 15 zwei Aussparungen 26 auf, welche in ihrer Längserstreckung quer zu der Verstellrichtung der Schneidmesser 15 angeordnet sind. Sie dienen der Einstellung der Schneidmesser 15 mit einem Hilfswerkzeug 27, welches gleichzeitig in der darüber liegenden Führungsöffnung 25 des Messerhalters 17 geführt wird. Das Hilfswerkzeug 27 ist als ein Exzenter ausgebildet, welcher im Wesentlichen aus einem Hebel 28 und einem Exzenterstück 29 besteht. Zur formschlüssigen und somit verdrehsicheren Verbindung mit dem Hebel 28 weist das Exzenterstück 29 an einer Stirnseite einen Ansatz 30 auf. An der gegenüberliegenden Stirnseite ist das Exzenterstück 29 mit einem exzentrischen Zapfen 31 versehen. Das Exzenterstück 29 wird in die jeweilige Öffnung 25 des Messerhalters 17 gesteckt, so dass der Zapfen 31 in die Aussparung 26 des Schneidmessers 15 greift und eine Drehbewegung des Hilfswerkzeugs 27, welche durch den Anwender ausgeübt wird, in eine geradlinige Anstellbewegung des Schneidmessers 15 an die Gegenschneide umgesetzt wird.

Die beschriebene Häckseleinrichtung des Ausführungsbeispiels eines erfindungsgemäßen Feldhäckslers ist nur eine von vielen bekannten Ausführungsformen. Die vorgeschlagene vorteilhafte Art der Schneidmessereinstellung durch das Zusammenwirken geschickt angeordneter Aussparungen und Führungsöffnungen mit einem Exzenterwerkzeug ist auf viele weitere Ausführungsformen, beispielsweise mit nur einer oder mit mehr als zwei Messerreihen auf der Häckseltrommel übertragbar ohne dabei den Rahmen der Erfindung zu verlassen.

## Patentansprüche

1. Selbstfahrender Feldhäcksler (1) zum Aufnehmen und Häckseln von Mais, Anwelkgras, Grünfutter und dergleichen Erntegut mit Aufnahme- und Einzugsorganen und einer nachgeordneten Häckseltrommel (8) mit in Umfangsrichtung der Häckseltrommel (8) mit Abstand zueinander angeordneten an Haltern (17) durch Befestigungsmittel (16) fixierte Schneidmesser (15), welche in ihrem Abstand zu einer der Häckseltrommel (8) zugeordneten Gegenschneide (9) nachstellbar sind, **dadurch gekennzeichnet, dass** die Schneidmesser (15) jeweils zumindest eine Aussparung (26) aufweisen, welche durch eine Öffnung (25) im Halter (17) des Schneidmessers (15) zumindest teilweise sichtbar ist, wobei die Öffnung (25) im Halter (17) des Schneidmessers (15) zur Unterstützung der Schneidmessereinstellung mit einem Hilfswerkzeug (27) dient.

2. Selbstfahrender Feldhäcksler (1) nach dem vorhergehenden Anspruch, **dadurch gekennzeichnet, dass** die Aussparungen (26) als längliche Durchbrüche, Langlöcher oder längliche Vertiefungen ausgebildet sind.

3. Selbstfahrender Feldhäcksler (1) nach einem der vorhergehenden Ansprüche, **dadurch gekennzeichnet, dass** jedes Schneidmesser (15) vorzugsweise zwei Aussparungen (26) aufweist.

4. Selbstfahrender Feldhäcksler (1) nach einem der vorhergehenden Ansprüche, **dadurch gekennzeichnet, dass** die Aussparungen (26) in ihrer Längserstreckung quer zu der Verstellrichtung der Schneidmesser (15) angeordnet sind.

5. Selbstfahrender Feldhäcksler (1) nach einem der vorhergehenden Ansprüche, **dadurch gekennzeichnet, dass** die zumindest eine Aussparung (26).der Schneidmesser (15) zur Aufnahme eines Exzenteransatzes (31) des Hilfswerkzeuges (27) dient, welches gleichzeitig in der Öffnung (25) des entsprechenden Schneidmesserhalters (17) geführt wird.

6. Selbstfahrender Feldhäcksler nach einem der vorhergehenden Ansprüche, **dadurch gekennzeichnet, dass** eine rotatorische Bewegung des Hilfswerkzeuges (27) in eine translatorische Bewegung der Schneidmesser (15) in bzw. entgegen der Richtung der Gegenschneide (9) umgesetzt wird.
